# EUROPEAN PATENT APPLICATION

(11) **EP 0 661 185 A1**
(43) Date of publication of application: **05.07.1995**
(21) Application number: 94309754.3
(22) Date of filing: 23.12.1994
(51) Int. Cl.: B60J 5/06, B60J 5/12, E06B 3/48, E06B 3/88

(54) **Improvements relating to protective devices for shutters**

(30) Priority: 30.12.1993 GB 9326556; 09.11.1994 GB 9422631
(71) Applicant: WHITING SHUTTERS (UK) LIMITED, Cardiff, South Glamorgan CF2 7XN (GB)
(72) Inventor: Collington, Ray, Berkshire, RG11 6UP (GB); Finnimore, Michael Joseph, Penarth, South Glamorgan, CF16 2TE (GB)
(74) Representative: James, Michael John Gwynne

(57) **Abstract**

A pair of adjacent shutter slat half portions 1 and 2 are interconnected at their rear faces by a hinge member 3. As the shutter moves around a guide roller a gap 4 is formed between the other faces of the two slats. However, this gap is screened off by a flexible strip 5, which prevents the entrapment of fingers of a user. The ends of the strip 5 slide within slots 6 within the slats and enlarged ends 7 of the strip prevent the strip from leaving the slots. As the slats are moved together again into the closed position, the strip 5 slides back into the two slots 6.

## Description

Shutters provided on rear doors of vans, for example, are articulated so that the series of slats will bend around a guide roller at the top of a rear opening in the van. The slats then either wind onto a roller or slide along the roof space. Where the slats bend around the guide roller the outer face of the shutter produces gaps of triangular cross-section where the faces of the slats move apart. There is the danger that anyone trying to pull the shutter down into the closed position will use this gap as a finger hold so that there is a serious possibility that the fingers will be pinched as the shutter lowers and amputation can even occur.

It is an object of this invention to provide means of protecting shutters against injuries of this nature to the user.

According to the invention there is provided a protection device for an articulated shutter mechanism formed from slats linked along their adjoining edges on one face only of the shutter, the device comprising a flexible protective strip connected slidably between each pair of slat edges on the other face of the shutter.

Because the protection strip covers the gap formed when the slats move around a guide roller, it is not possible for a user to insert fingers into this gap. As the shutter is moved down each gap between the slats closes and the protective strip slides into the body of the slat.

In the preferred arrangement each strip could be mounted within slots in the pair of slats with means being provided to prevent the ends of the strip from leaving the slots. Other possibilities exist. For example each strip could be mounted slidably about a fixed locating member on one slat and be secured to the other slat, or each strip could be mounted slidably about fixed locating members on both slats. Another possibility is for each of the strips to be mounted at one end within a slot in one of the slats and be fixed at the other end to the adjoining slat.

Ideally each protective strip will extend across the width of the shutter in discrete portions, with fixing means for securing mounting parts retaining the strip portions being attached to the slots in the regions between the strip portions.

Preferably each strip is formed from a resilient plastics sheet.

The invention may be performed in various ways and preferred embodiments will now be described, by way of example, with reference to the accompanying drawings, in which:-
Figures 1 and 2 are vertical cross-section and front plan views respectively of one preferred form of shutter protective device of this invention;
Figures 3 and 4 are similar views of the protective device but shown in an open condition;
Figures 5, 6 and 7 are respectively vertical sections in the open and closed conditions and a front view in the closed condition of a further example of the invention; and
Figures 8 and 9 are verticals section through yet further examples of protective devices of this invention.

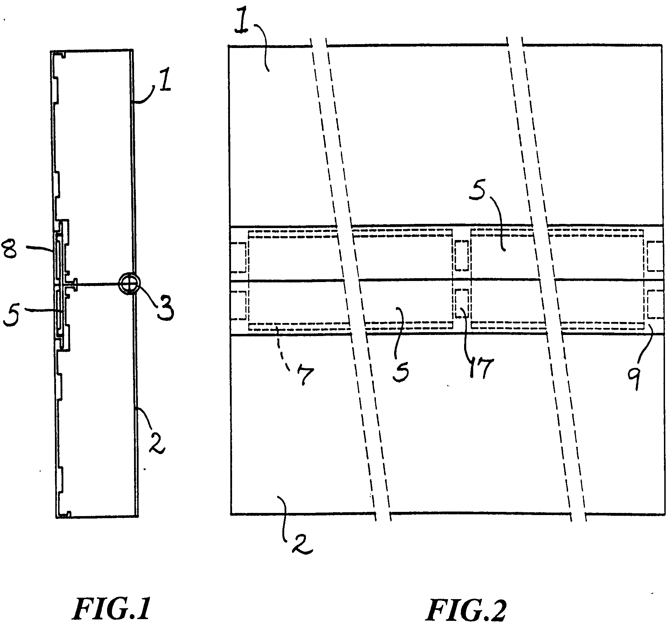

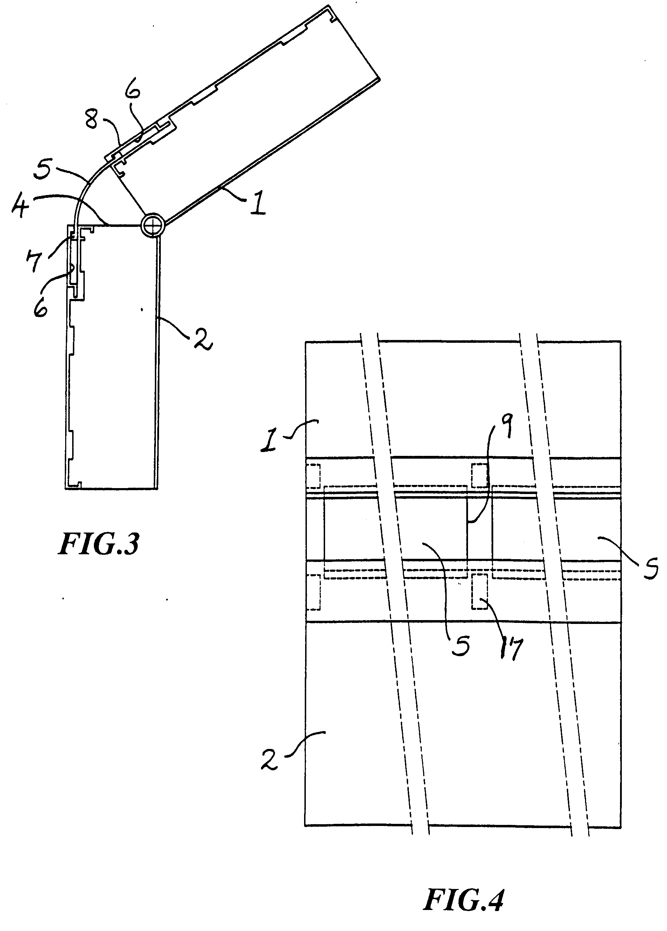

The device shown in Figures 1 to 4 is built into a pair of adjacent shutter slat half portions 1 and 2. These slats are interconnected at their rear faces by a hinge member 3. As the shutter moves around a guide roller a gap 4 (Figure 3) is formed between the other faces of the two slats 1 and 2. However, this gap is screened off by a flexible strip 5. The ends of the strip 5 slide within slots 6 within the slats and enlarged ends 7 of the strip prevent the strip from leaving the slots. As the slats are moved together again into the closed position, illustrated in Figures 1 and 2, the strip 5 slides back into the two slots 6. As can be seen from Figures 2 and 4 the strips 5 extend across the width of the shutter in discrete portions, enabling fixing devices 17 to secure, onto the slats 1 and 2, coverplates 8 defining the slots 6. The short gap 9 between adjacent portions of the strip 5 allow for the escape of water, dust etc. which might become trapped within the slots 6, but are too small to trap a finger.

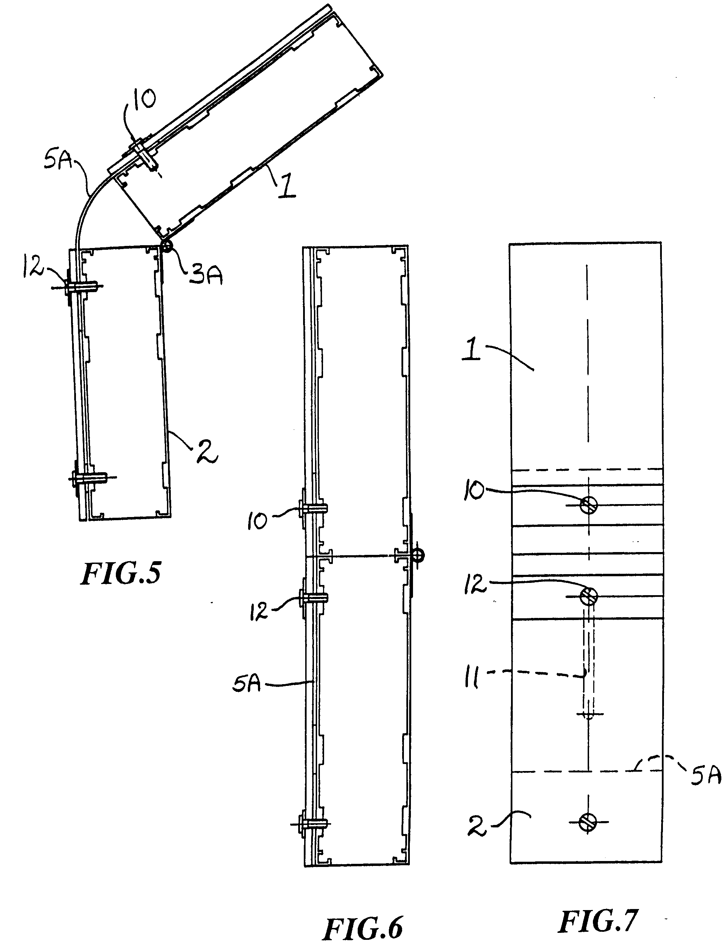

The arrangement shown in Figures 5 to 7 has an alternative form of hinge 3A interconnecting the slats 1 and 2. The protective strip 5A is attached to the slat 1 by a fixing screw 10 whilst the other end of the strip 5A has an elongated slot 11 which slides about another fixing screw 12. If desired both end portions of the strip 5A could incorporate elongated slots to slide about the respective screws 10 and 12.

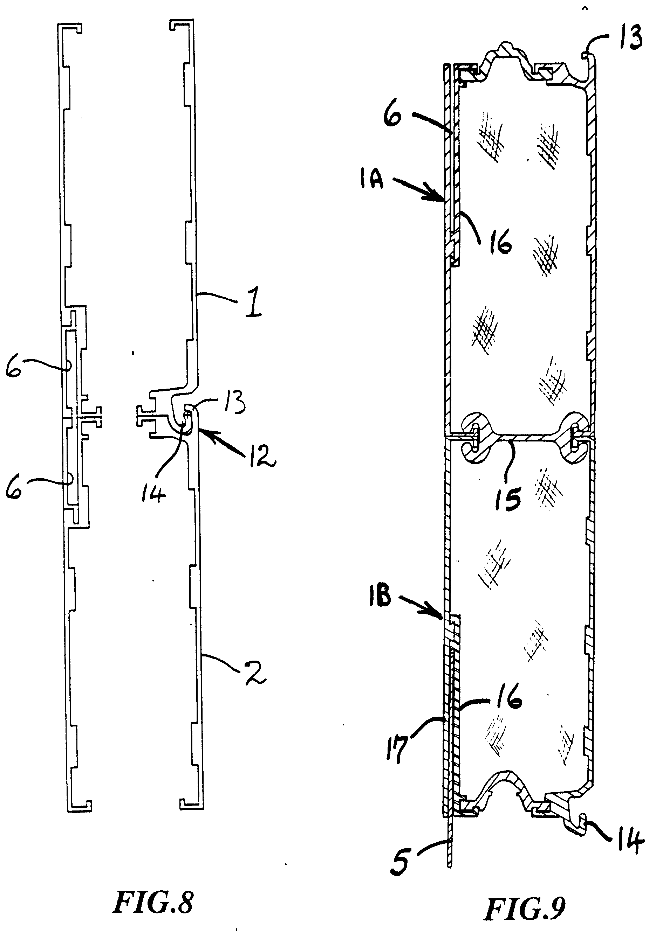

The arrangement shown in Figure 8 is similar to that of Figures 1 to 4 except that it incorporates an interlinking hinge arrangement 12 between the slats 1 and 2. The hook-like portions 13 and 14 can readily be introduced to one another during assembly but in the final structure this hinge cannot come apart because the degree of articulating movement of the shutter is restrained by side channels. For clarity the protective strip 5 has been omitted so as to show clearly the shape of the slots 6.

Figure 9 shows two half portions 1A, 1B of a slat 4 joined together by a link member 15. The ends have the hook-like portions 13 and 14 for forming hinge connections with adjacent slats. At each end a panel 16 is fitted internally to define the slots 6 within which the flexible strips will be housed. The external face 17 of the slat is therefore smooth and the structure retaining the flexible strip is well protected against damage. A short portion of the flexible strip could be fixed at, say, the lower end by rivets through the one slot 6, whilst the other end of the strip (ideally a flat polypropylene sheet) will be slidably housed in the slot 6 of the upper slat, to articulate when the shutter is opened.

## Claims

1. A protection device for an articulated shutter mechanism formed from slats linked along their adjoining edges on one face only of the shutter, the device comprising a flexible protective strip connected slidably between each pair of slat edges on the other face of the shutter.

2. A device according to claim 1, wherein each said strip is mounted within slots in the pair slats and means is provided to prevent the ends of the strip from leaving the slots.

3. A device according to claim 1, wherein each said strip is mounted slidably about a fixed locating member on one slat and is secured to the other slat.

4. A device according to claim 1, wherein each said strip is mounted slidably about a fixed locating members on both slats.

5. A device according to claim 1, wherein each said strip is mounted at one end within a slot in one of the slats and is fixed at the other end to the adjoining slat.

6. A device according to Claim 5, wherein a panel is fitted internally of the slat to define each slot for receipt of an end of a strip.

7. A device according to any one of claims 1 to 6, wherein each protective strip extends across the width of the shutter in discrete portions, with fixing means for securing mounting parts retaining the strip portions being attached to the slots in the regions between the strip portions.

8. A device according to any one of claims 1 to 7, wherein each strip is formed from a resilient plastics sheet.

9. Any combination of features of an articulated shutter mechanism substantially as described herein and/or shown in the accompanying drawings.
